# EUROPEAN PATENT APPLICATION

(11) **EP 1 646 261 A2**
(43) Date of publication of application: **12.04.2006**
(21) Application number: 05023876.5
(22) Date of filing: 02.11.2005
(51) Int. Cl.: H04Q 7/38

(54) **A method to control measurement operation of a mobile station**

(71) Applicant: SIEMENS AKTIENGESELLSCHAFT, 80333 München (DE)
(72) Inventor: Hofmann, Jürgen, 86504 Merching (DE); Vutukuri, Eswar, Romsey SO51 7LR (GB)

(57) **Abstract**

The invention relates to a method to control measurement operation of a mobile station in a communication system.

The mobile station is sending neighbour cell measurement reports in the uplink direction and the network indicates the mobile station to perform neighbour cell measurements over a predefined extended period of time.

## Description

### A method to control measurement operation of a mobile station

The invention relates to a method to control measurement operation of a mobile station in a communication system.

The invention relates especially to control measurement operation of a mobile station during "Repeated SACCH" on uplink direction within a GSM/GERAN communication system

Currently a mobile station is used to perform neighbour cell measurements during a given SACCH multiframe period. The SACCH multiframe period last 480ms. The mobile station reports measured values of received signal level from various neighbouring base stations to the network on the next uplink SACCH.

At the meeting GERAN#26 the concept of "Repeated SACCH" was agreed. This will be applied to increase robustness of data transmission over the "Slow Associated Control Channel, SACCH" which is required in the presence of robust AMR full rate modes in GSM/GERAN networks.

If there is serial SACCH repetition in uplink direction, the measurements made by the mobile station during only one SACCH multiframe can be reported to the network. This is because the measurement period still spans one SACCH multiframe length where as the measurement reporting period spans two SACCH multiframe periods.

Hence, the messages on the uplink can change only once every two SACCH multiframes due to repetition mode.

This introduces a disparity in the measurement period being 480 ms and the measurement reporting period being 960 ms because of repetition.

Such a disparity in the measurement reporting period and the actual measurement period is undesirable, because in this case not all measurements taken by the mobile can be reported to the base station.

Therefore an extension of the measurement period to 960 ms for serial SACCH repetition has been proposed at GERAN#26.

To keep normal measurement period would lead to less measurement reports received by the base station.

To extend the measurement period would provide a higher accuracy of neighbour cell measurements. If the BCCH neighbour cell list is extended (for example if a high number of base stations have to be monitored by the mobile station in one SACCH period) the number of samples or measurements for RXLEV values of a single base station would become low yielding to a lower reliability of the reported RXLEV measurement.

But with the extended measurement period of 2 SACCH frames the sample number would be doubled leading to a higher reliability of the reported figure.

It is the aim of the present invention, to develop a method, for supporting both options for the measurement period to allow flexibility for various deployment scenarios.

This is solved by the features of claim 1. Other advantages of the invention are described by the features of the succeeding claims.

The inventive method is very useful because of its flexibility. On one hand, the current measurement procedure for neighbour cell measurements could be kept unchanged when there are less number of neighbours to be monitored and on the other hand the measurement period could be extended to two SACCH multiframe periods length when there are many neighbours to be monitored.

The decision is completely under the network control and hence is very flexible and could be tailored to the actual number of neighbours in the neighbour cell list.

In the following text, the actual invention is described in detail.

The proposed solution is, to signal an indication from the network, i.e. from the BTS or the BSC, to the mobile station to either use a normal (for example a measurement period spanning one SACCH multiframe) or an extended measurement period (for example spanning two or more SACCH multiframe periods) for measurement reporting.

This is especially done, when "Repeated SACCH" is used in uplink direction by the mobile station.

This can be done by adding this indication to broadcast messages (for example adding in "System Information Messages") sent either on a common control channel or on a dedicated traffic channel or by using one or more spare bits in the SACCH Layer 1.

The mobile station will obey the signalling indication and adapt the measurement period accordingly.

An indication of the used measurement period sent by the mobile to the base station is then not required.

## Claims

1. Method to control measurement operation of a mobile station in a communication system,
- whereas the mobile station is sending neighbour cell measurement reports in the uplink direction,
- wherein the network indicates the mobile station to perform neighbour cell measurements over a predefined extended period of time.

2. Method according to claim 1, wherein the network sends the indication to perform the neighbour cell measurements over a predefined extended period of time when there is a large number of neighbour cells that are needed to be monitored by the mobile station.

3. Method according to claim 1, wherein the indication to use an extended measurement period is conveyed to the mobile station using one of the broadcast messages

4. Method according to claim 1, wherein the indication message is sent either on a common control channel or on a dedicated traffic channel or using one of the system information messages.

5. Method according to one of the preceding claims, wherein the communication system is a GSM/GERAN network and the measurement reports are sent on uplink Slow Associated Control Channel SACCH.

6. Method according to claim 1 or claim 5 wherein the indication message is sent using one of the spare bits in the layer 1 header of SACCH

7. Method according to claim 1 or claim 5, wherein the uplink SACCH messages are repeated according to "Repeated SACCH" in uplink direction of a GSM/GERAN communication system

8. A method according to one of the preceding claims 1 to claim 7, wherein the predefined extended period of time is equal to two SACCH multiframe periods.
